# EUROPEAN PATENT APPLICATION

(11) **EP 3 415 409 A1**
(43) Date of publication of application: **19.12.2018**
(21) Application number: 18176453.1
(22) Date of filing: 07.06.2018
(51) Int. Cl.: B62J 9/00, B62J 7/04

(54) **STRADDLE TYPE VEHICLE**

(30) Priority: 12.06.2017 JP 2017115512
(71) Applicant: HONDA MOTOR CO., LTD., Tokyo 107-8556 (JP)
(72) Inventor: Kikuchi, Takehiko, Saitama, 3510193 (JP)
(74) Representative: Beder, Jens

(57) **Abstract**

To use pannier boxes provided on left and right of a vehicle body in a self-supporting state when removed from the vehicle body.

A first pannier box 17 and a second pannier box 18 are removably mounted on a vehicle body under left and right lateral sides of a seat. When each of the first pannier box and the second pannier box is dismounted from the vehicle body, a first connecting member 80 provided in an inner lateral surface 17b of the first pannier box 17 and a second connecting member 82 provided in an inner lateral surface 18b of the second pannier box 18 are connected in a condition where the inner lateral surfaces 17b, 18b face each other. An engaging hole 81 which extends in a vertical direction is provided in the first connecting member 80, and an engaging projection 83 which extends in the vertical direction is provided in the second connecting member 82. When the engaging hole 81 and the engaging projection 83 are engaged in the vertical direction, the first pannier box 17 and the second pannier box 18 are integrally connected and can stand in a self-supporting state.

## Description

### TECHNICAL FIELD

The present invention relates to a straddle type vehicle which is provided with pannier boxes fitted on left and right rear lateral sides of a vehicle body, and particularly, to the left and right pannier boxes which are removable from the vehicle body thereby to be used in a self-supporting state.

### BACKGROUND ART

A pannier box is an onboard container box and is provided in pairs on left and right rear lateral sides of a vehicle body. With respect to one of the left and right pannier boxes located on the side on which a muffler is arranged, there is the pannier box that is provided on an inner lateral surface (surface on the vehicle body side) thereof with a recess for clearing or escaping the muffler (see a patent reference 1).

### PRIOR ART REFERENCE

Patent reference 1: Japanese patent Application laid-open publication No. 2011-051438

### DISCLOSURE OF THE INVENTION

### PROBLEM TO BE SOLVED BY THE INVENTION

By the way, there may be cases where it is desired to remove or dismount the left and right pannier boxes from the vehicle body and to use them as a chair or a table or the like on the ground and the like. However, although the pannier box in this case is requested to stand by itself, there may be cases where it is hard to stand in a self-supporting state when being placed on the ground and the like since the pannier box is designed with object of being mounted on the vehicle. Particularly, when the clearance recess with respect to the muffler is provided, the pannier box is unstable and it is hard to stand in a self-supporting state since the clearance recess is provided in such a form as to hollow out a lower part of a rectangular parallelepiped.

It is therefore an object of the present invention to allow a pannier box removed from a vehicle body to easily stand in a self-supporting state.

### MEANS FOR SOLVING THE PROBLEM

In order to solve the above problem, according to a first feature of the present invention, a straddle type vehicle comprises a vehicle body, a seat (15) arranged on a rear side of the vehicle body, a first pannier box (17) and a second pannier box (18) removably arranged on left and right lateral sides of the seat, wherein connecting members (80, 82) for connecting the first pannier box (17) and the second pannier box (18) when the first pannier box (17) and the second pannier box (18) are removed from the vehicle body, are provided in the first pannier box (17) and the second pannier box (18). With this configuration, the first pannier box (17) and the second pannier box (18) easily stand in a self-supporting state even when being placed on the ground, by connecting these pannier boxes through the connecting members (80, 82) when they are removed from the vehicle body.

According to a second feature of the present invention, the connecting members comprises a first connecting member (80) provided in the first pannier box (17) and a second connecting member provided in the second pannier box (18), wherein an engaging hole (81) which extends in a vertical direction is provided in one of the first connecting member (80) and the second connecting member (82), and an engaging projection (83) which extends in the vertical direction so as to be removably engaged with the engaging hole (81) is provided in the other.

With this configuration, since the connecting members (80, 82) for connecting the first pannier box (17) and the second pannier box (18) are formed by the engaging hole (81) and the engaging projection (83) which extend in the vertical direction, these two connecting members (80,82) are able to be connected by the engagement in the vertical direction. Therefore, the connecting operation can be easily performed.

According to a third feature of the present invention, the connecting members (80, 82) are provided in each of inner lateral surfaces (17b, 18b) of the first pannier box (17) and the second pannier box (18), wherein the first pannier box (17) and the second pannier box (18) are connected in a condition where the inner lateral surfaces (17b, 18b) thereof are arranged in face-to-face relation.

With this configuration, the connecting members are provided in each of the inner lateral surfaces (17b, 18b) of the first pannier box (17) and the second pannier box (18), and the first pannier box (17) and the second pannier box (18) are connected in a condition where the inner lateral surfaces (17b, 18b) thereof are arranged in face-to-face relation, so that it is possible to house each of the connecting members between the inner lateral surfaces (17b, 18b). Thus, since a projecting member like the connecting member is housed between the pannier boxes thereby to make the periphery clean and tidy, the pannier boxes may be easily used as a chair or a table or the like and an external appearance at the time of connection may be improved.

According to a fourth feature of the present invention, a muffler (28) is located on one side of the vehicle body under the seat (15), and a recess (18d) for clearing the muffler (28) is provided in the inner lateral surface (18b) of one pannier box (18) to be arranged on the side of the muffler, of the first pannier box (17) and the second pannier box (18).

With this configuration, the pannier box (18) having the clearance recess (18d) with respect to the muffler in its lower part becomes hard to stand by itself. However, when the first pannier box (17) and the second pannier box (18) are integrally connected to each other, even the pannier box which is hard to stand by itself can be used in such a condition as to stand in a self-supporting state.

According to a fifth feature of the present invention, each of the first pannier box (17) and the second pannier box (18) is provided on an upper part thereof with an upwardly opened opening and a lid (17a, 18a) for upwardly opening and closing the opening.

With this configuration, since the first pannier box (17) and the second pannier box (18) are connected so as to stand in a self-supporting state, it is possible to take in and out articles from an upper side when the opening and the lid (17a, 18a) for opening and closing the opening are provided on the upper part of each of pannier boxes. Therefore, it is possible to easily take in and out the articles, and it is easy to use.

### EFFECTS OF THE INVENTION

According to the present invention, the first pannier box (17) and the second pannier box (18) can be integrated into a single body by connection through the connecting members (80, 82) when they are removed from the vehicle body. Therefore, these integrally connected pannier boxes easily stand in a self-supporting state when being placed on the ground. Accordingly, when the pair of left and right pannier boxes (17, 18) has been removed from the vehicle body, it is possible to be used as the chair or the table or the like in a self-supporting state.

### BRIEF DESCRIPTION OF THE DRAWINGS

FIG. 1 is a side view of a two-wheeled motorcycle in accordance with an embodiment of the present invention;
FIG. 2 is a rear view of the above motorcycle;
FIG. 3 is a plan view of a rear part of the above motorcycle;
FIG. 4 is a perspective view of a rear carrier and a rear frame in a region corresponding to FIG. 3;
FIG. 5 is a perspective view of left and right pannier boxes mounted on pannier stays;
FIG. 6 is an exploded perspective view of the pannier boxes and pannier stays shown in FIG. 5;
FIG. 7 is an exploded perspective view showing a configuration of a supporting part of a first pannier box;
FIG. 8 is a perspective view of a neighboring part of a second pannier box when viewed from an obliquely upward direction;
FIG. 9 is a perspective view of a supporting part of the second pannier box when viewed from an obliquely downward direction;
FIG. 10 is a view showing a neighboring part of a lock mechanism of the second right pannier box when viewed from an inside of the vehicle body;
FIG. 11 is a view showing a state of removing the pannier stay from FIG 10;
FIG. 12 is a cross sectional view taken along line 12-12 of FIG. 10;
FIG. 13 is an explanatory view of the operation with respect to an extension part of a lock plate and a lock lever;
FIG. 14 is an explanatory view with respect to the key operation of a key cylinder and movement of a corresponding lock part;
FIG. 15 is an explanatory view of the movement of the lock part;
FIG. 16 is a perspective view showing a state in which the left and right pannier boxes are integrally connected;
FIG. 17 is a perspective view of assistance in explaining the mounting of connecting members with respect to the pannier boxes;
FIG. 18 is a view showing a variation of the connecting members;
FIG. 19 is a view showing another variation of the connecting members;
FIG. 20 is a view showing still another variation of the connecting members; and
FIG. 21 is a perspective view of the connecting members which are inserted and engaged in the left and right direction.

### BEST MODE FOR CARRYING OUT THE INVENTION

Hereinafter, an embodiment of the present invention will be explained with reference to the accompanying drawings. In the following description, directions such as front, rear, left, right, and the like are set on the basis of each direction of a vehicle to which the present invention is applied. Moreover, in the proper drawings, a front is indicated by an arrow Fr, a rear is indicated by an arrow Rr, a left is indicated by an arrow LH, and a right is indicated by an arrow RH, as occasion arises. Further, an inward direction (inside) will be indicated by an arrow IN and an outward direction (outside) will be indicated by an arrow OUT.

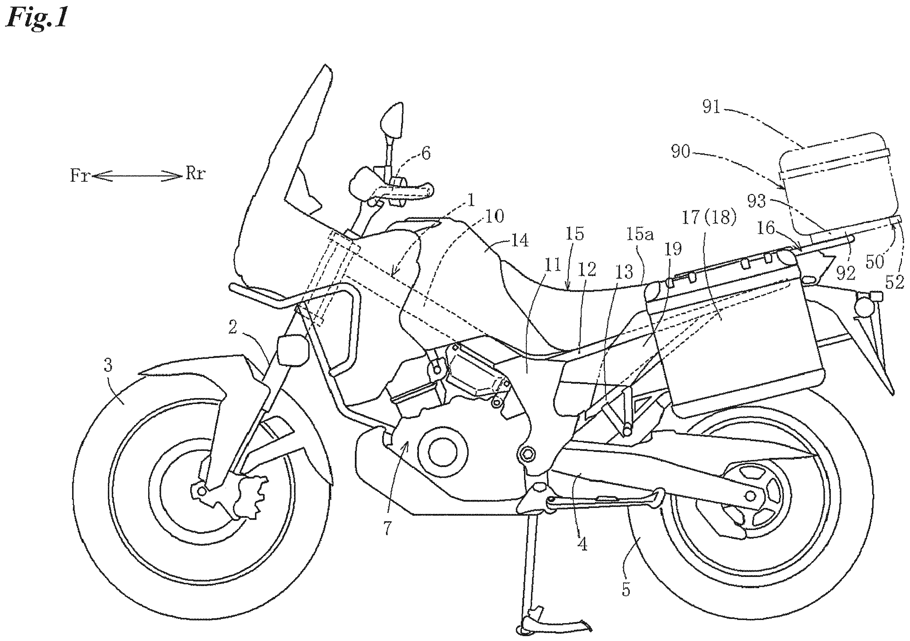

In FIG. 1, this two-wheeled motorcycle has a front wheel 3 supported on a front end of a vehicle body frame 1 through a front fork 2 and a rear wheel 5 supported on a rear part thereof through a rear swing arm 4.The front wheel 3 is steered by a handle 6, and the rear wheel 5 is driven by an engine 7 supported on the vehicle body frame 1.

The vehicle body frame 1 includes a main frame 10 extending rearwardly in an obliquely downward direction above the engine 7, a center frame 11 extending downwardly from a rear end of the main frame 10 in the rear of the engine 7 and supporting a front end portion of the rear swing arm 4, a pair of left and right seat rails 12 extending rearwardly from an upper part of the center frame 11 in an obliquely upward direction, and a back stay 13 providing a connection between a lower part of the engine 7 and rear parts of the seat rails 12. The seat rails 12 and the backstay 13 constitute a rear frame which forms a rear part of the vehicle body frame 1.

A fuel tank 14 is supported on the main frame 10, and a seat 15 is supported on the seal rails 12 in the rear of the fuel tank 14. The seat 15 is formed in a tandem type and has a front seat 15a for a rider and a rear seat 15b for a passenger.

A rear carrier 16 is arranged in the rear of the seat 15. Further, a first pannier box 17 is carried on a left side under the seat 15 and a second pannier box 18 is carried on a right side, respectively. The first pannier box 17 and the second pannier box 18 are an onboard container box in the form of a box which is open upward at an opening part provided in an upper part. It is made of a light alloy or the like and has a light and solid structure. It is also called a pannier case, a side box, a side bag, a side trunk and the like other than the pannier box.

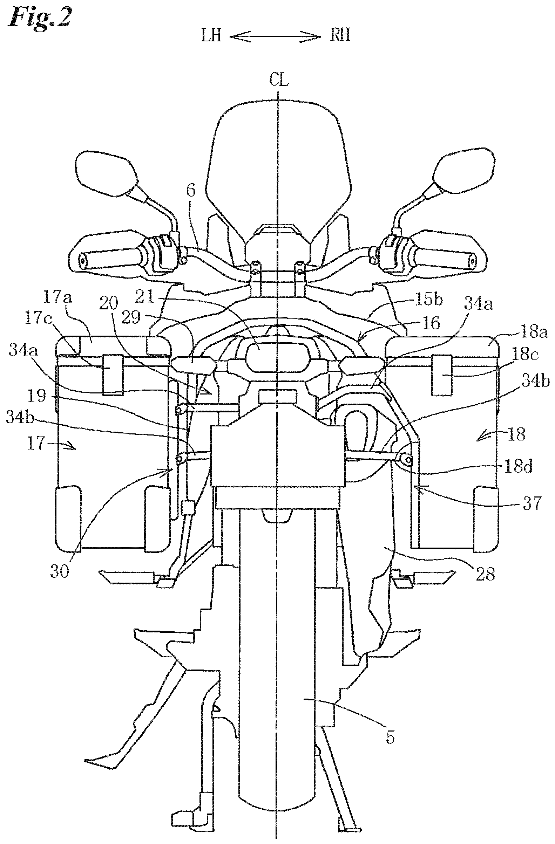

As shown in FIG. 2, left and right sides of the vehicle body under the seat 15 are covered with side covers 19, and an upper side of the rear wheel 5 is covered with a rear fender 20. A tail lamp 21 is provided at a rear end portion of the rear fender 20. Rear winkers 29 are arranged on left and right sides of the tail lamp 21.

The first pannier box 17 and the second pannier box 18 are separated and supported on left and right sides with the rear carrier 16 interposed therebetween. Since the pannier boxes 17, 18 each are required to increase the capacity while suppressing an overhang in the vehicle width direction, they have a longitudinally extending rectangular parallelepiped form. Each of them has a lid 17a, 18a capable of upwardly opening and closing the opening part. Each of the lids 17a, 18a is fixed on and unfixed from a main body side of the pannier box through a buckle 17c, 18c. The buckles 17c, 18c are locked and unlocked by a key 74 which is used for key operation of a lock mechanism 50 to be referred to later.

A muffler 28 is arranged on the right side of the rear wheel 5. The muffler 28 extends rearwardly in the obliquely upward direction along the lateral side of the rear wheel 5. Therefore, an inside lateral surface of the second pannier box 18 is formed in the shape of a clearance recess 18d in such a manner that a width in the left and right direction of an approximately lower half side is thinned, in order to escape or clear the muffler 28.

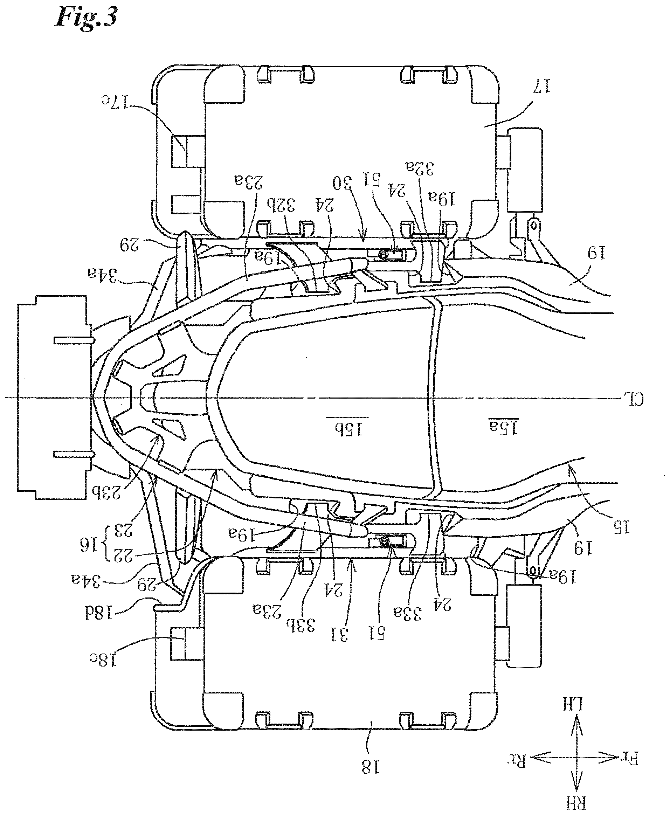

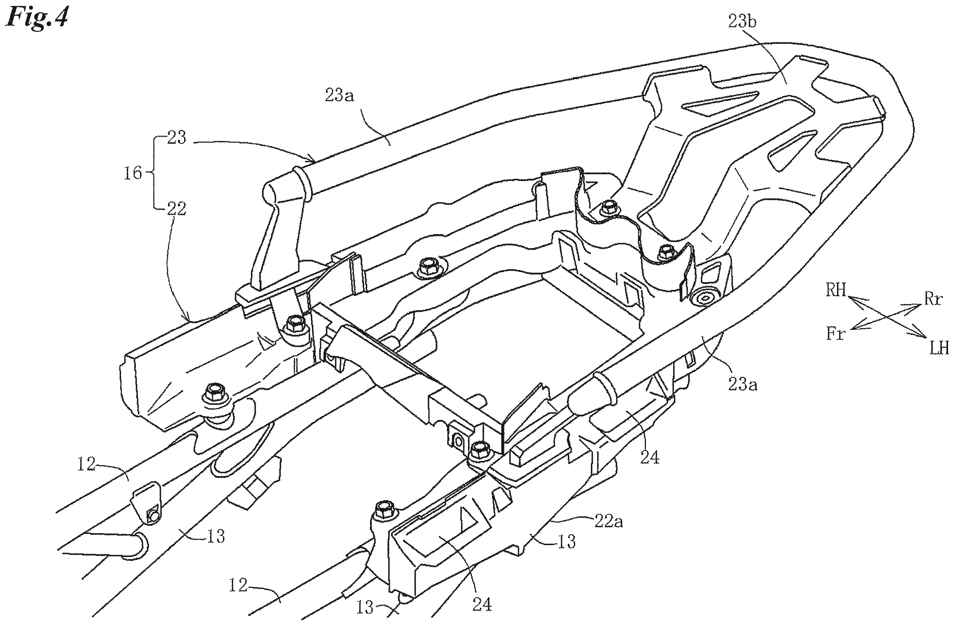

FIG. 3 is a plan view of a rear part of the above motorcycle showing mainly a part of the rear carrier 16. The rear carrier 16 is composed of a resin carrier bracket 22 (see FIG. 4) and a metallic carrier main body part 23. The carrier main body part 23 is a size larger than the carrier bracket 22 and is a member of substantially U-shape in a plan view which extends along an outside of the rear part of the carrier bracket.

With respect to the carrier main body part 23, a part which is arranged on both left and right sides of the rear seat 15b is formed as a rear grip 23a. A rear part of the carrier main body part extends rearwardly beyond the rear seat 15b, and a baggage receiver 23b of metallic plate is integrated in the rear part.

On an upper part of the side cover 19 located on the lateral side of the seat 15 there are formed front and rear window openings 19a. Upper engagement recesses 24 (see FIG. 4) face each of the window openings 19a. The upper engagement recesses 24 are provided in a front part and a rear part of the outer lateral surface of the carrier bracket 22. Upper hooks 32a, 32b and 33a, 33b provided in the upper portions of pannier stays 30, 31 which support the first pannier box 17 and the second pannier box 18 thereon are configured to be engaged with each of the upper engagement recesses.

FIG. 4 is a perspective view of the rear carrier 16 and the rear frame in a part corresponding to FIG. 3. The carrier bracket 22 is a member of substantially U-shape which has left and right parts overlapping with the left and right seat rails 12 in a plan view, and these left and right parts are fastened by bolts to the seat rails 12. The carrier main body part 23 is fastened by bolts to the carrier bracket 22 and applies suitable rigidity to the vehicle body fame by being mounted indirectly on the seat rails 12 such that the vehicle body frame provides moderate flexibility.

In the left and right parts of the carrier bracket 22 there are integrally formed the upper engagement recesses 24 in a state of being separated apart from each other in the forward and rearward direction. The upper engagement recesses 24 are provided in corresponding positions to the window openings 19a of the side covers 19. They are provided at spaced intervals corresponding to the upper hooks 32a, 32b and 33a, 33b and formed in the shape of upwardly opened square hole. An opening form of the upper engagement recess 24 is substantially a rectangular or trapezoidal shape and is formed into a relatively large opening.

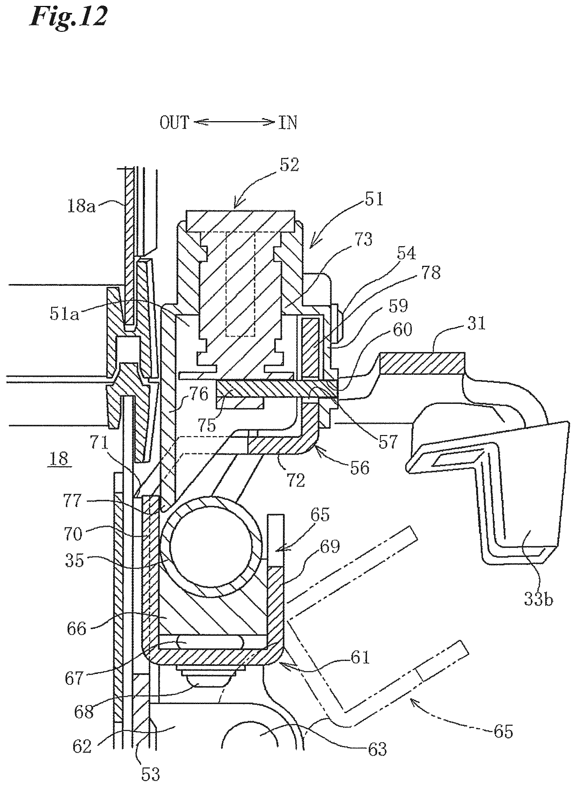

For example, the upper hook 32a (similar to other upper hooks) to be tightly engaged into the upper engagement recess is made of resin, and formed so as to have an outer configuration of substantially the same shape and the same size as the other upper hooks. In addition, a wall surface in the periphery is formed in a taper shape in such a way as to be inclined in the engaging direction. Further, a slot which extends in parallel to the engaging direction is formed in a part of the wall surface (see FIG. 12). In this way, it is configured such that the engagement of the upper hook 32a into the upper engagement recess 24 is easily performed.

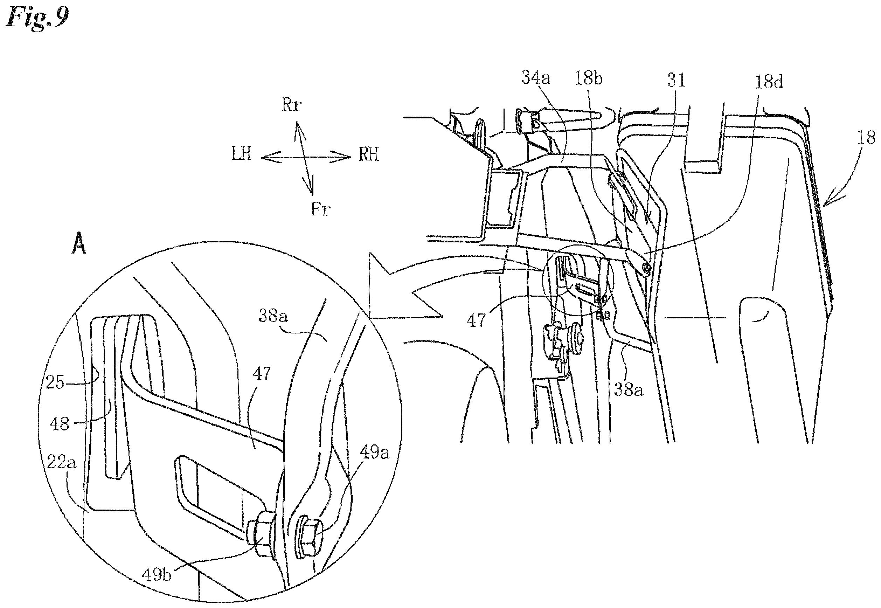

On the carrier bracket there are mounted front end portions of the rear grip 23a each of which is located between the front and rear upper engagement recesses 24. A rear portion of the carrier main body part 23 is mounted on a rear end portion of the carrier bracket 22. Further, lower engagement recesses 25 (see FIG. 9) to be referred to later are provided in a lower part of the carrier bracket 22 and in an intermediate part 22a thereof located between the front and rear engagement recesses 24.

Next, the support structure of the pannier box with respect to the vehicle body (rear carrier 16) will be explained. As shown in FIG. 3, the first pannier box 17 and the second pannier box 18 are supported on the pannier stays 30, 31, respectively, and the pannier stays 30, 31 each are engaged with the pair of front and rear upper engagement recesses 24 provided in the carrier bracket 22, through the upper hooks 32a, 32b and 33a, 33b each of which projects into the inside of the vehicle body from above.

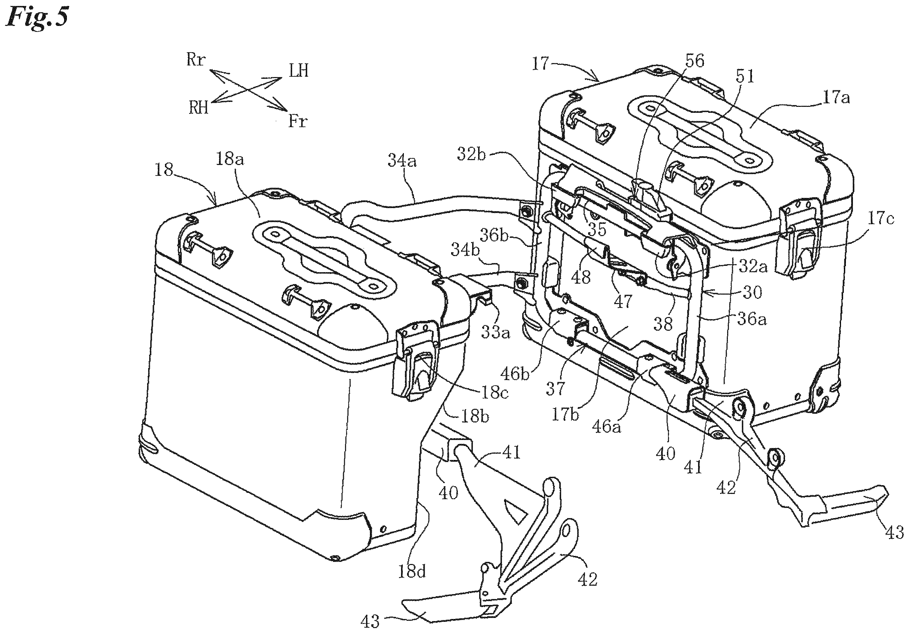

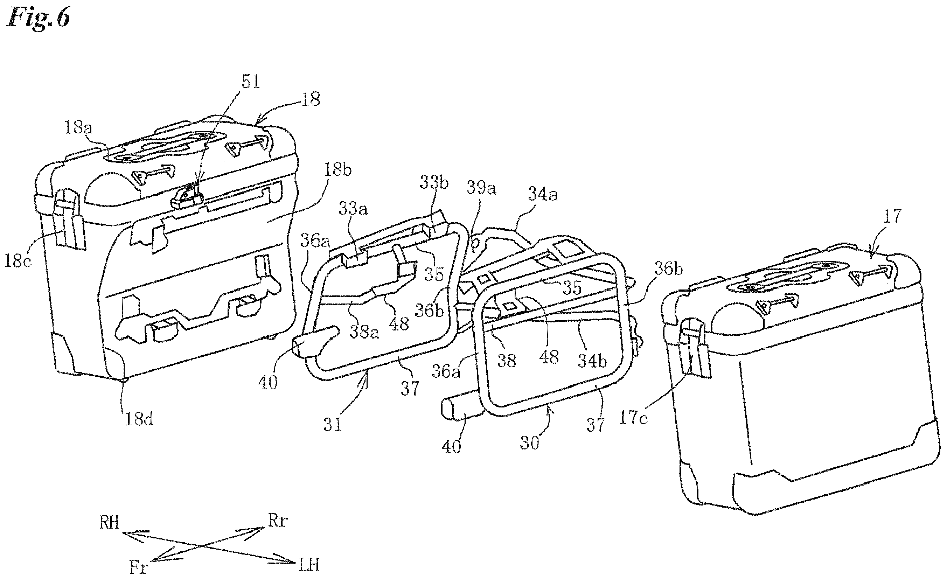

FIG. 5 is a perspective view showing a connected and integrated state of the first pannier box 17 and the second pannier box 18 through the left and right pannier stays 30, 31 at the time of being mounted on the vehicle, and FIG. 6 is an exploded perspective view showing a separated state of the first pannier box 17 and the second pannier box 18. As shown in these drawings, the first pannier box 17 and the second pannier box 18 are engaged with and supported on the pannier stays30, 31 which are supported on the side of the vehicle body. The left and right pannier stays 30, 31 are integrally connected to each other by cross pipes 34a, 34b.

The cross pipes 34a, 34b pass through under a fender rear part 20b and connect the left and right pannier stays 30, 31, respectively. The first pannier box 17 is fixedly engaged with the pannier stay 30 at an inner lateral surface 17b thereof, and similarly the second pannier box 18 is fixedly engaged with the pannier stay 31 at an inner lateral surface 18b thereof.

The inner lateral surface 18b of the second pannier box 18 is formed with the clearance recess 18d for avoiding the interference with the muffler. This clearance recess 18d is formed in the shape of a recess in such a configuration that the lower half side of the inner lateral surface 18b of the second pannier box 18 is recessed outwardly and that the width in the left and right direction of a bottom side is smaller than the upper part.

However, the first pannier box 17 and the second pannier box 18 have the same size (see FIG. 3) in a top plan view. They are identical in width in the left and right direction and in width in the forward and rearward direction thereof, and identical in height from the bottom to the top thereof. In this sense, outer circumferential parts of the pannier boxes are of symmetrical configuration. In other words, the first pannier box 17 and the second pannier box 18 are identical in protruding amount in the left and right direction and in the forward and rearward direction, and identical in projecting amount in the height direction, respectively.

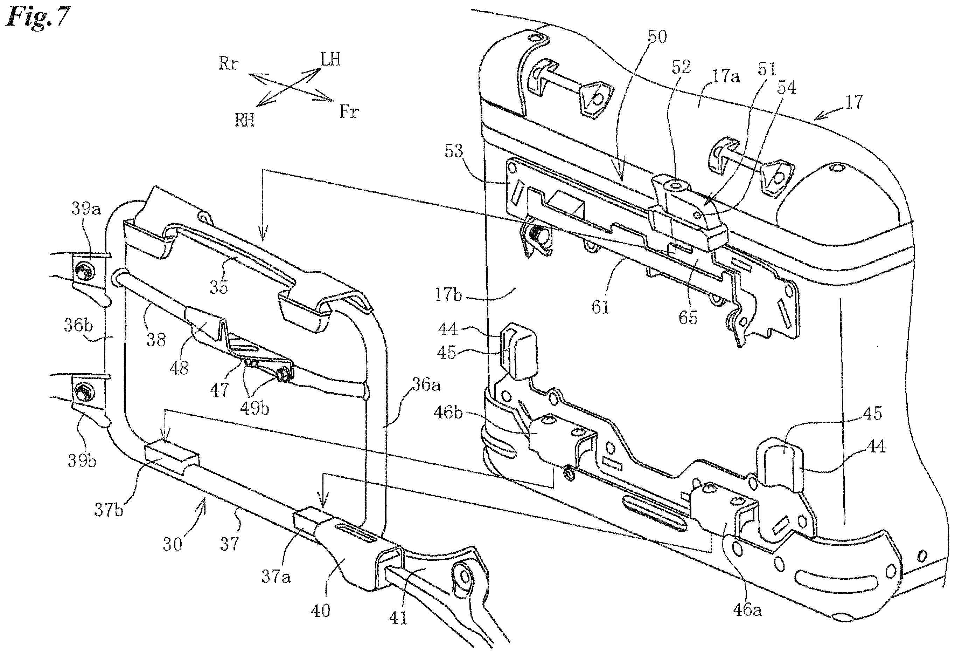

FIG. 7 is a perspective view showing a state in which the inner lateral surface 17b of the first pannier box 17 arranged on the left side of the vehicle body is separated from the pannier stay 30. Herein, the side of the second pannier box 18 arranged on the right side of the vehicle body is configured similarly. Therefore, like or corresponding parts between the side of the first pannier box 17 arranged on the left side of the vehicle body and the side of the second pannier box 18 arranged on the right side of the vehicle body are given like reference characters.

In the upper part of the inner lateral surface 17b of the first pannier box 17 there is provided the lock mechanism 50. The lock mechanism 50 includes a lock lever 51, a key cylinder 52 provided in the lock lever, and a lock plate 53.

The lock plate 53 is provided in the upper part of the inner lateral surface 17b, and the lock lever 51 is pivotally mounted on the lock plate 53 through a pivot shaft 54. The first pannier box 17 can be locked to be undetachable from the pannier stay 30 at the time of being locked by the key cylinder 52 in a state in which the first pannier box 17 is fixedly engaged with the pannier stay 30. Details of the lock mechanism 50 will be referred to later.

The same applies to the side of the second pannier box 18. Like reference characters are given with respect to each of the left and right lock mechanisms 50.

Guides 44 are located in front and in the rear of an intermediate part in the vertical direction of the inner lateral surface 17b. In each of the guide 44 there is formed a vertical groove 45 which is of substantially U-shaped cross section and which extends in the vertical direction. Lateral side parts 36a, 36b are engaged into these vertical grooves 45.

Lower hooks 46a, 46b are located in front and in the rear of the lower part of the inner lateral surface 17b. These lower hooks 46a, 46b have a downwardly open U-shaped cross section and are engaged from above with pedestals 37a, 37b which are provided on the front and rear sides of a lower side part 37. The lower part of the pannier box 17 is fixedly engaged with the lower side part 37 when the lower hooks 46a, 46b are fixedly engaged with the lower side part 37.

The pannier stay 30 is made of metallic pipe and has substantially a rectangular shape. It is formed in substantially a quadrilateral shape by an upper side part 35, the lateral side parts 36a, 36a and the lower side part 37. In addition, the front and rear lateral side parts 36a, 36b are connected by a middle stay 38. Herein, the pannier stay 31 on the right side has the middle stay 38 which is different in shape. The middle stay 38 has substantially an L-shape that connects an intermediate portion in the forward and rearward direction of the upper side part 35 and the front lateral side part 36.

A sub stay 47 is fastened by a bolt at an intermediate portion in the forward and rearward direction of the middle stay 38. Brackets 39a, 39b are provided on the lateral side part 36b located on the rear side of the sub stay. To the brackets 39a, 39b, each of left end portions of the cross pipes 34a, 34b are fastened by bolts. The cross pipes 34a, 34b are removably mounted on the pannier stays 30, 31.

The pedestals 37a, 37b of enlarged angular cross section are provided on the front and rear sides of the lower side part 37. A joint 40 having a downwardly open U-shaped cross section is located in a front end portion of the lower side part 37. The lower side part 37 is connected to a holder extension part 41 through the joint 40. The holder extension part 41 is a part which extends rearwardly from a footrest holder 42. When the joint 40 is engaged with the holder extension part 41 from outside, the holder extension part 41 is integrally connected to the footrest holder 42. The holder extension part 41 extends rearwardly from the footrest holder 42. Herein, the joint 40 of the pannier stay 31 on the right side is provided in the vicinity of a lower portion of the lateral side part 36a on a lateral surface of the pannier stay 31 (see FIG. 6).

The footrest holder 42 has substantially a V-shape as shown in FIG. 5 An upper end portion of the footrest holder 42 is connected to the back stay 13 (see FIG. 1) and extends downwardly. A pillion step 43 which is a footrest for a passenger is attached to a lower end portion of the footrest holder. The footrest holder 42 forms a part of the vehicle body frame (back stay 13) by being fixedly fastened to the back stay 13, so that the holder extension part 41 also forms a part of the vehicle body frame.

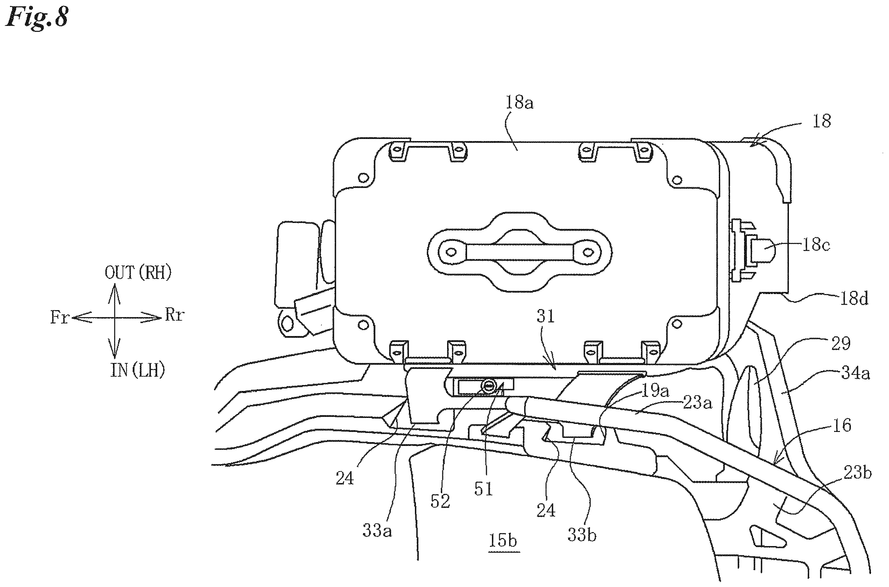

FIG. 8 is a view showing, from above, the second pannier box 18 and neighboring region thereof in a state of being mounted on the vehicle. FIG. 9 is a view showing, from obliquely below, the second pannier box 18 and the neighboring region thereof in a state of being mounted on the vehicle, wherein an engagement state of the sub stay 47 is shown in a circle A of the drawing in an enlarged scale. As shown in FIG. 8, the second pannier box 18 also is supported on the pannier stay 31, and an upper part of the pannier stay 31 is engaged with the upper engagement recess 24 of the carrier bracket 22 by the upper hooks 33a, 33b.

The rear grip 23a overlaps with the pannier stay 31 on the upper side and is inclined rearwardly so as to approach a vehicle body center line CL, so that a space is formed between a front part of the rear grip 23a and the pannier box 18. The lock lever 51 is efficiently accommodated by using this space between the seat 15 and the second pannier box 18 and, more precisely, between the front part of the rear grip 23a and the pannier box 18. In addition, since the lock lever 51 is accommodated in such a way as to be embedded in this space, the space is filled with the lock lever in a top plan view so that the external appearance is improved.

The sub stay 47 is configured in the same way as the second pannier box 18, and so, the explanation will be made with reference to FIG. 9. As shown in the circle of this drawing in an enlarged scale, the sub stay 47 extends obliquely upward from the middle stay 38a to an inside of the vehicle body. Then, a tip part of the sub stay is bent upwardly and further a distal end side thereof is bent downwardly, whereby a fuse hook 48 of substantially U-shaped cross section is formed. This fuse hook 48 is inserted into and engaged with the lower engagement recess 25 which is formed in the lower part 22a (see FIG. 4) of the carrier bracket 22 so as to open downwardly.

The fuse hook 48 allows the pannier stay to be fixed more firmly to the vehicle body by being engaged into the lower engagement recess 25 and forms an impact absorbing structure at the time the vehicle body falls. In other words, when the vehicle body falls and large force is added to the pannier box, a part of substantially U-shaped cross section of the fuse hook 48 is deformed so as to absorb this force. Thus, since the fuse hook 48 has the impact absorbing structure, only the sub stay 47 is deformed and other parts such as the pannier stay, the carrier bracket 22 and the like can be prevented from deformation. Therefore, even if the sub stay 47 is deformed due to falling, only an exchange of the sub stay 47 is required, so that repair can be easily performed and repair cost can be reduced.

A base part of the sub stay 47 is fastened to the middle stay 38a by a bolt 49a and a nut 49b. After the fuse hook 48 is inserted into the lower engagement recess 25, the bolt 49a is fastened to the nut 49b arranged on the inside of the vehicle body, so as to be fixed to the base part of the sub stay 47 from outside (on the side of the pannier box). Thus, the bolt 49a cannot be unfastened since it is covered with the pannier box 18 in a state in which the pannier box is mounted on the pannier stay 31.

The same applies to the sub stay 47 of the pannier stay 30 on the left side, and the fuse hook 48 whose base part is fixed on the middle stay 38 is inserted into and engaged with the lower engagement recess 25 of the carrier bracket 22.

The left and right pannier stays 30, 31 are mounted on the vehicle body side prior to mounting the first pannier box 17 and the second pannier box 18 thereon. Referring now to the left pannier stay 30, the upper hooks 32a, 32b are placed in alignment with the upper engagement recesses 24, and the joint 40 is placed on the holder extension part 41 of the footrest holder 42. In this condition, the whole is pressed downwardly. Then, the upper hooks 32a, 32b are inserted into and engaged with the upper engagement recesses 24, and the joint 40 is fitted against the holder extension part 41.

Next, the fuse hook 48 of the sub stay 47 is engaged into the lower engagement recess 25, and the base part of the sub stay 47 is fixedly fastened to the middle stay 38 by the bolt 49a and the nut 49b. Thus, it is supported on the vehicle body side by engagement at four locations. The pannier stay 31 on the right side can be mounted on the vehicle body in a similar way.

The first pannier box 17 and the second pannier box 18 are supported by the engagement with the pannier stays 30, 31 which are supported on the vehicle body side. This engagement is performed such that the lower hooks 46a, 46b provided at each of the lower parts of the pannier boxes are inserted from above into and engaged with the pedestals 37a, 37b which are provided on each of the lower side parts 37 of the pannier stays, and that each of the upper side parts 35 is engaged with an engagement lever (to be referred to later) which is provided in each of the lock plates. After that, the first pannier box 17 and the second pannier box 18 are not able to be removed from the pannier stays 30. 31 when the engagement lever is locked by the lock mechanism 50.

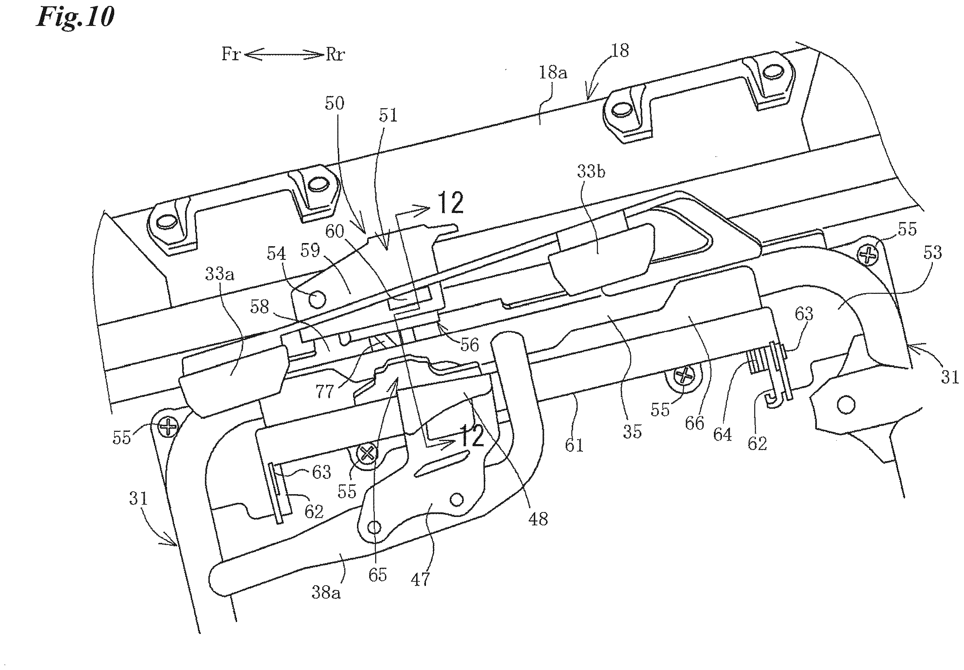

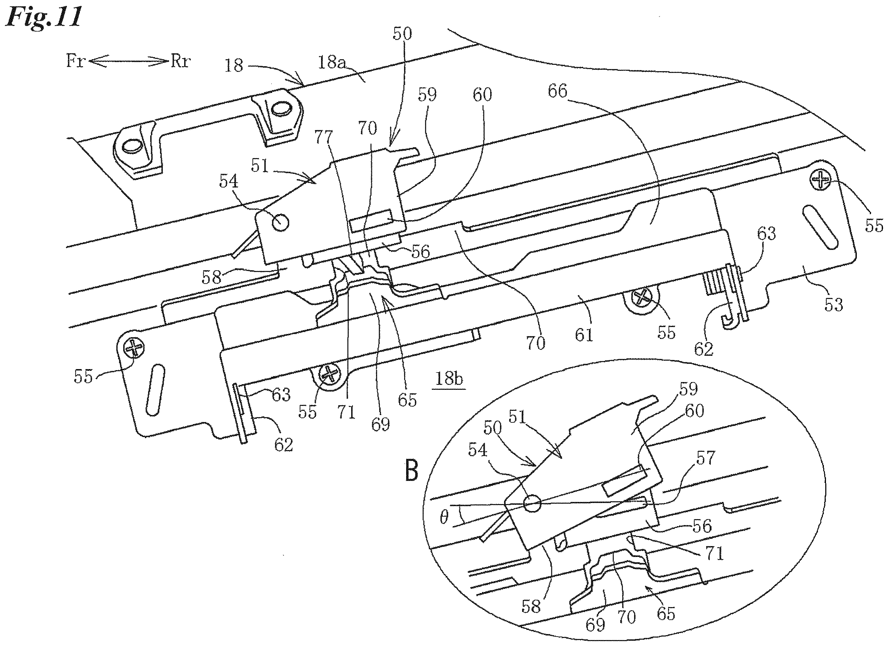

Next, the details of the lock mechanism 50 will be explained. FIG. 10 is a view showing a neighboring region of the lock mechanism 50 of the second right pannier box 18 when viewed from the inside of the vehicle body, and FIG. 11 is a view showing a state of removing the pannier stay 31 from FIG 10, wherein a state in which the lock lever 51 is rotated to its unlock position is shown in a circle B. FIG. 12 is a cross sectional view taken along line 12-12 of FIG. 10.

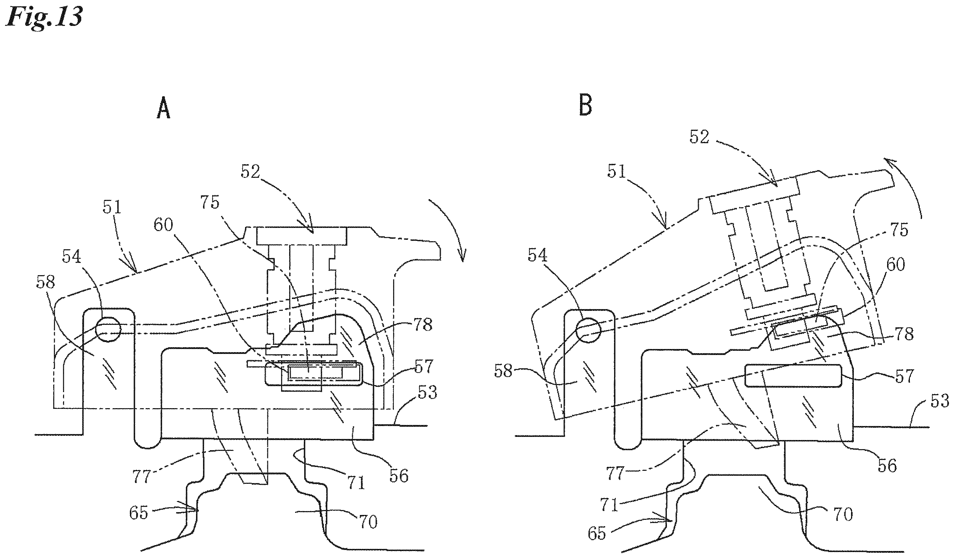

Herein, the lock position of the lock lever 51 is a rotated position in which a cam 75 of a key cylinder 52 to be referred to later is aligned with and engaged into a first lock hole 57 provided in the lock plate 53 (see FIG. 13-A). Further, the unlock position of the lock lever 51 is a rotated position in which the cam 75 is not aligned with and not engaged into the first lock hole 57 (see FIG. 13-B).

Hereinafter, the lock mechanism of the second pannier box 18 will be explained. In FIGS. 10 and 11, the lock plate 53 extends long in the forward and rearward direction in such a way as to run parallel to the upper side part 35, and a periphery of the lock plate is fastened to the inner lateral surface 18b by screws 55. An upper part protrudes above the upper side part 35. Upwardly projecting lock wall 56 and support wall 58 formed by a part of the periphery are provided in an overlapping position with the lock lever 51 and configured to project upwardly so as to enter an inside of the lock lever 51.

A first lock hole 57 is provided in the lock wall 56 and configured to overlap with a second lock hole 60 which is provided in a lower portion of a rear end of a inner lateral wall 59 of the lock lever 51, when the lock lever is rotated to the lock position (see the circle B of FIG. 11). The inner lateral wall 59 forms a part of an outer circumferential wall of the lock lever 51 and is a lateral surface facing toward the inside of the vehicle body.

Further, a front upper part of the inner lateral wall 59 is mounted on the support wall 58 by the pivot shaft 54 which extends in the left and right direction, and the lock lever 51 is rotatable around the pivot shaft 54. By the way, in this example, the second lock hole 60 is offset from the first lock hole 57 in the unlock position of the lock lever. Meanwhile, the second lock hole 60 overlaps with the first lock hole 57 of the lock wall 56, and the cam 75 can be engaged, in the lock position of the lock lever.

A lower part of the lock plate 53 is cut out at an intermediate part in the forward and rearward direction, and the engagement lever 61 is arranged so as to extend long in the forward and rearward direction along this cutout part. The engagement lever 61 is rotatably supported at both ends thereof in the longitudinal direction on erected parts 62 of the lock plate 53 by pivots 63 which extend in the forward and rearward direction. A lock part 65 of substantially U-shaped cross section is located in a region in the vicinity of the lock lever 51, of the engagement lever 61.

A state in which an upwardly opened portion of the lock part 65 faces upward is a standing state of the engagement lever 61 (see a state of a solid line in FIG. 12), and a state in which the upwardly opened portion faces sideways, for example, at an angle of about 45 degrees is a tilted state of the engagement lever 61 (see a state of a phantom line in FIG. 12).The engagement lever 61 is energized to rotate in the tilted direction by a spring 64. A tilted angle can be freely set. Herein, in FIG. 12, the middle stay, the sub stay and the like are omitted in order to show the lock part 65.

As shown in FIG. 12, the upper side part 35 of the pannier stay 31 is fitted to the lock part 65. A lower surface side of the upper side part 35 is supported on a spacer 66. The spacer 66 in this part is formed with a recess of substantially semicircular shape on the surface side thereof, and the upper side part 35 is configured to be located in the vicinity of the upwardly opened part by this spacer 66. More specifically, the spacer 66 is provided not only in the lock part 65 but also substantially over the full length of the engagement lever 61 and fixed by a fastening member 68 from a bottom surface side of the engagement lever 61 through the intermediary of a cushioning material 67. Herein, the height of an inner lateral surface (surface on the vehicle body side) of the spacer 66 changes in the longitudinal direction and is highest at both ends.

In a cross section of FIG. 12, an inner lateral wall 69 (on the vehicle body side) of a pair of opposed standing walls of the lock part 65 is slightly lower than a top portion of the upper side part 35, an outer lateral wall 70 (on the pannier box 18 side) is slightly higher than the top portion of the upper side part 35. A part of the lock plate 53 overlapping with the lock part 65 is provided with a cutout 71, and the outer lateral wall 70 at the time of standing enters the cutout 71.

Further, a part of the upper part of the lock plate 53 located in the vicinity of an upper end of the outer lateral wall 70 at the time of standing and approximately below the lock lever 51 in the locking state (illustrated states in FIGS. 10, 11 and 13A) forms the lock wall 56 including the cutout 71. This part extends upwardly, then, bends inwardly in the vicinity of the lower end portion of the lock lever 51 so as to form an outwardly extending horizontal part 72, and thereafter bends upwardly again so as to form the lock wall 56. The lock wall 56 projects long upwardly along an inner surface of the inner lateral wall 59 of the lock lever 51.

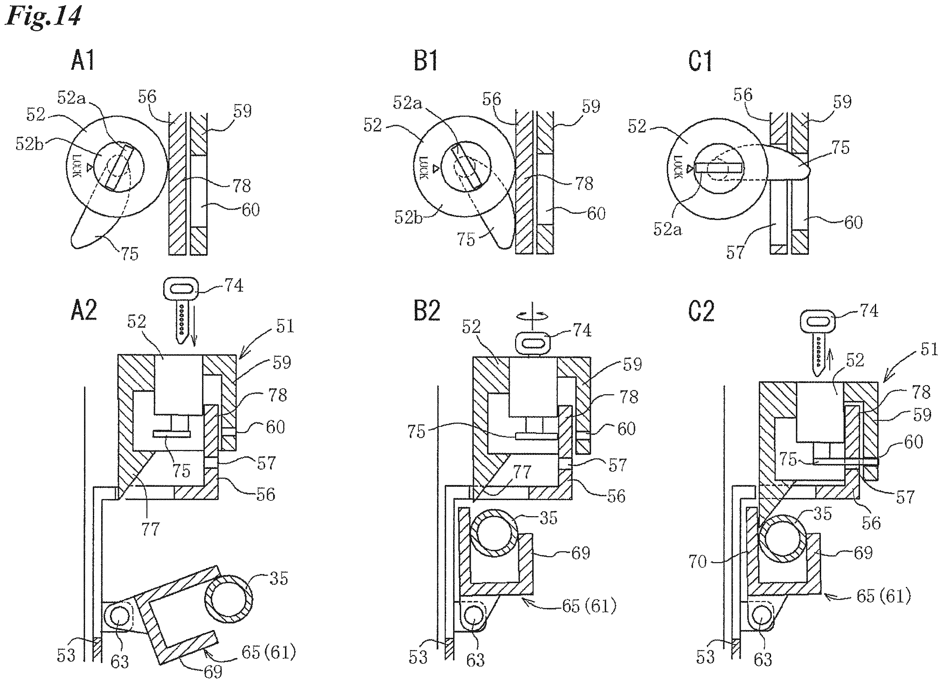

An upper part of the lock lever 51 is narrowed in width from a step portion 73 in the upward direction, and an upper part of the key cylinder 52 is fixed to the upper part of the lock lever 51. A lower half part of the key cylinder 52 projects into a cam chamber 51a which is provided in a lower part below the step portion 73 of the lock lever 51, and the cam 75 is rotatably provided in a lower end of the key cylinder. The cam 75 is rotated when being operated by the key 74 (see FIG. 14) which is inserted into the key cylinder 52.

When the key 74 is located in the lock position (see FIG. 14) of the key cylinder and when the lock lever 51 also is located in the lock position, the cam 75 enters the first lock hole 57 and the second lock hole 60 and brings the lock lever 51 into a nonrotatable locked state. Herein, in order to encourage the reliable lock by the key 74, the key 74 can be pulled out only when the key has been rotated to the lock position of the key cylinder and cannot be pulled out in the position other than the lock position, at the time the key 74 is rotated to the locking side.

The lock wall 56 extends upwardly beyond the first lock hole 57 to a position close to the step portion 73, and an upper part of the lock wall 56 above the lock hole 57 forms an extension part 78. The extension part 78 allows the cam 75 to be rotated in the locking direction only when the first lock hole 57 of the lock wall 56 is in alignment with the second lock hole 60 of the inner lateral wall 59 of the lock lever 51 and regulates the rotation such that the cam 75 does not enter the second lock hole 60 when the first lock hole 57 of the lock wall 56 is offset from the second lock hole 60 of the inner lateral wall 59.

Accordingly, the extension part 78 is an upper part of the lock wall 56 above the first lock hole 57 and a part for closing the second lock hole 60. When the first lock hole 57 is not in alignment with the second d lock hole 60, the extension part 78 extends to an inside of a rotating locus of the cam 75 thereby to prevent the cam 75 from entering the second lock hole 60, so that the key 74 cannot be pulled out.

Therefore, the extension part 78 is a part for preventing misrecognition of the lock (such misrecognition that the lock lever 51 is located in the lock position where the lock lever 51 engages the lock part 65 although actually the lock lever 51 is not located in the lock position).

A rotation regulating range with respect to the cam 75, namely, a rotation angle θ (FIG. 11-B) of the lock lever 51 may be freely set by adjusting a size of the extension part 78. However, let a straight line connecting the first lock hole 57 and the pivot shaft 54 be a reference, the rotation angle is an angle formed by the reference and a straight line which connects the second lock hole 60 and the pivot shaft 54 and which is offset from the reference. Accordingly, it is more desirable that the angle θ is set to be relatively small so as not to be easily recognized by visual inspection and so as to misrecognize incomplete lock as lock completion. As a result, the extension part 78 can be made relatively small in size.

An outer lateral wall 76 of the lock lever 51 projects long downwardly and a distal end of the outer lateral wall is formed with a lock nail 77. When the lock lever 51 is rotated to the lock position, the lock nail 77 overlaps with an upper part of the outer lateral wall 70 of the lock part 65 which is previously in the standing state by rotating the engagement lever 61, and allows the lock part 65 not to be rotated to the tilted position. When the lock lever 51 in this condition is locked by the key cylinder 52, the lock mechanism 50 becomes locked, and the pannier box 18 cannot be dismounted from the pannier stay 31.

In this lock state, when the cam 75 is rotated by the key operation so as to slip out of the first lock hole 57 and the second lock hole 60, the lock lever 51 is released from the lock by the key cylinder 52 and the lock mechanism becomes unlocked. Then, when the lock lever 51 is rotated in the clockwise direction as shown in the circle B of FIG. 11 and the lock nail 77 is disengaged from the outer lateral wall 70 of the lock part 65, the lock part 65 is rotated around the pivots 63 so as to be brought into the tilted position, so that the pannier box 18 can be dismounted from the pannier stay 31.

FIG. 13 is an explanatory view of a relationship between the lock lever 51 and the lock wall 56 in the lock position and unlock position of the lock lever with reference to the lock lever in a state shown in FIG. 11. The lock position of the lock lever 51 is shown in FIG. 13-A, and the unlock position of the lock lever 51 is shown in FIG. 13-B. Herein, the lock lever 51 is indicated by a phantom line.

In FIG. 13-A, the lock lever 51 is rotated to the lock position. At that time, the lock lever 51 is rotated around the pivot shaft 54 in the clockwise direction of the drawing thereby to allow its lower end portion to extend substantially horizontally as shown in the drawing, and the second lock hole 60 overlaps with the first lock hole 57 of the lock wall 56. At the same time, the lock nail 77 is placed on and engaged with the outer lateral wall 70 of the lock part 65 whereby to regulate upward rotation of the outer lateral wall 70 with respect to the drawing.

The outer lateral wall 70 enters an inside of the cutout 71 of the lock plate 53 when the lock part 65 is in the standing position. In this condition, when the key cylinder 52 is brought into the lock position, the cam 75 is engaged in each of the first lock hole 57 and the second lock hole 60 whereby to regulate the rotation of the lock lever 51.

In FIG. 13-B, the lock lever 51 is rotated to the unlock position. At that time, the lock lever 51 is rotated around the pivot shaft 54 in the counterclockwise direction of the drawing thereby to allow its lower end portion to be tilted obliquely upward to the right side when facing the drawing, and the second lock hole 60 is offset upward from the first lock hole 57 of the lock wall 56. At the same time, the lock nail 77 is moved away from the outer lateral wall 70 of the lock part 65 to release the outer lateral wall 70, whereby to allow the outer lateral wall 70 to be rotated upwardly with respect to the drawing.

Prior to the rotation of the lock lever 51, the key cylinder 52 is brought into the unlock position, and the cam 75 previously slips out of the first lock hole 57 and the second lock hole 60.

Further, although the positional relation between the second lock hole 60 and the cam 75 during the rotation of the lock lever 51 is constant, the extension part 78 exists between the cam 75 and the second lock hole 60 as far as the second lock hole 60 overlaps with the extension part 78, so that, due to the extension part 78, the cam 75 is prevented from rotation in the direction to be engaged into the second lock hole 60 (see FIG. 14-B1) and that the key cylinder 52 is prevented from rotation to the lock position (see FIG. 14-B2).

It is enough that the extension part 78 is provided in a range overlapping with a movement locus of the second lock hole 60 in the upward position of the first lock hole 57, and it is enough that this range is only a range in which the regulation of the movement of the cam 75 is required, in the rotating locus of the lock lever 51. Therefore, it is enough that the extension part 78 has a relatively small projecting area of substantially chevron shape.

FIG. 14 is diagrams for explaining the key operation of the key cylinder 52. The diagram on the upper side shows the key cylinder 52 from above, and the diagram on the lower side is a cross section of a part similar to FIG. 12 in a state corresponding to the key operation. Further, A1 and A2 show a state in which the lock part 65 is falling in the unlock position. B1 and B2 show a state in which the lock part 65 is standing in the unlock position. C1 and C2 show a state in the lock position. Herein, each diagram on the lower side is simplified and schematized as compared with FIG. 12.

First, in FIG. 14-A1, a key groove 52a is provided in the center of an upper surface of the key cylinder 52. When the key 74 is inserted into the key groove 52a, a central rotor part 52b is rotated. The key groove 52a is rotated together with the rotor part 52b. In a specific position on the upper surface of the key cylinder 52 and on an outer circumferential side of the rotor part 52b there are engraved characters "LOCK" and an alignment mark (for example, a triangle mark). When an end portion of the key groove 52a is aligned with the alignment mark, the key cylinder is brought into the lock position.

By the way, in the lock position of the key cylinder the key 74 can be inserted and pulled out. The lock position of the key cylinder is only one place, and every part other than the lock position on the upper surface of the key cylinder 52 is the unlock position in which the key 74 cannot be pulled out.

A1 and A2 of FIG. 14 show a state in which each of the lock lever 51 and the key cylinder 52 is located in the unlock position. In this condition, the first lock hole 57 is offset from the second lock hole 60 and the extension part 78 closes the second lock hole 20. This state is a state of starting the rotation of the key 74, so that the cam 75 is located in a position remote from the second lock hole 60.

By the way, although it looks as if the key 74 is inserted in the the key 74 can be performed only in the lock position of the key cylinder, the key 74 in the unlock position remains inserted into the key cylinder 52. Then, the lock lever 51 is located in the unlock position as shown in FIG. 14-2A, and the lock nail 77 releases the lock part 65, so that the lock part 65 is brought into the falling state.

Although each of the lock lever 51 and the key cylinder 52 is located in the unlock position in B1 and B2 of FIG. 14, the cam 75 is rotated to come into contact with the extension part 78, and the lock part 65 is brought into the standing state but is in an incomplete lock state in which the lock nail 77 is not engaged. This case is in a state of easily incurring the erroneous recognition as if the lock lever and the key cylinder are locked, but the key cylinder 52 is regulated by the extension part 78 so as not to be rotated and cannot be rotated to the lock position. In this condition, since the key 74 is not pulled out, it is possible to recognize that the lock of the lock mechanism 50 is not completed, and it is possible to encourage completion of the lock.

FIGS. 14-C1 and C2 show a state in which each of the lock lever 51 and the key cylinder 52 is located in the lock position. Since the first lock hole 57 is aligned with the second lock hole 60 and the cam 75 enters both of the lock lever and the key cylinder, the key cylinder 52 can be rotated to the lock position. Further, the lock nail 77 engages the lock part 65 thereby to regulate the rotation to the falling side. As a result, the lock of the lock mechanism 50 is completed, and the completion can be recognized by the extraction of the key 74.

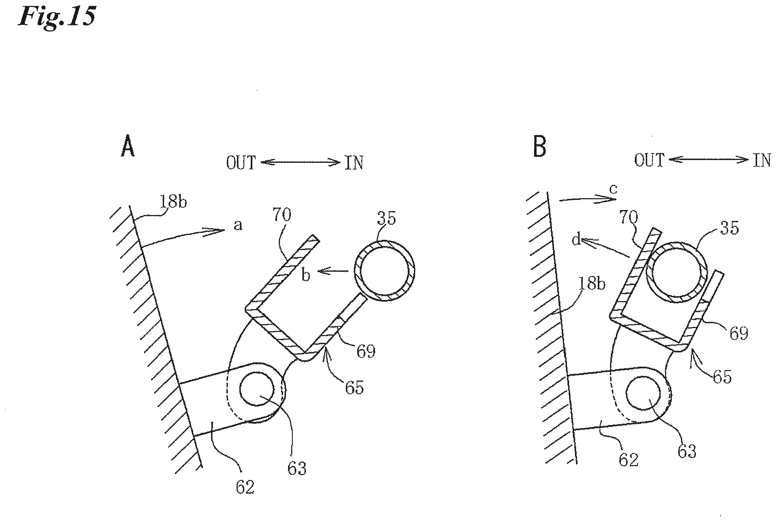

FIG. 15 is diagrams for explaining the relationship between the movement of the lock part 65 and the upper side part 35 of the pannier stay 31. Herein, each diagram shows a part similar to FIG. 12 in a simplified and schematized manner. Further, although the following explanation will be made with respect to the second pannier box 18, the left side has a similar configuration. FIG. 15-A shows an initial state of mounting the pannier box (the inner lateral surface 18b is shown, and the same hereinafter.) on the pannier stay 31. The lock part 65 is in the tilted state. The pannier box is in such a condition that the lower part is previously engaged with the lower side part 37 and the upper part side is rotated toward the upper side part 35 with the engaged portion as a fulcrum (see FIG. 7).

At that time, although the lock part 65 is located in the tilted position, the tip of the lock part 65 is located in the vicinity of the upper side part 35 since the inner lateral surface 18b of the pannier box is tilted to the side to be separated apart from the upper side part 35. Therefore, when the inner lateral surface 18b of the pannier box is rotated toward the upper side part 35 as indicated by an arrow "a", the upper side part 35 enters the inside of the lock part 65 as indicated by an arrow "b".

FIG. 15-B shows a state in which the pannier box is further rotated in the standing direction as compared with FIG. 15-A. When the inner lateral surface 18b of the pannier box is rotated further toward the upper side part 35 as indicated by an arrow "c", the upper side part 35 pushes the lock part 65 in such a direction as indicated by an arrow "d" and allows the lock part 65 to stand in opposition to the spring 64 (FIG. 10).

Accordingly, when the pannier box is allowed to stand upright, the lock part 65 is brought into the standing position. Further, when the lock part 65 is engaged by the lock nail 77, the lock part 65 becomes nonrotatable, and the pannier box is engaged with the pannier stay 31. Thereafter, when the key cylinder 52 is brought into the lock position, the lock state as shown in FIG. 12 is completed.

Next, the procedure for mounting the pannier box on the vehicle will be explained. First, the left and right pannier stays 30and 31 are mounted on the left and right sides of the vehicle body, respectively. The right pannier stay 30 is engaged at three locations in such a manner that the front and rear hooks 32a, 32b provided on the upper side part 35 are aligned each with the corresponding upper engagement recesses 24 from above and that the joint 40 is placed on the holder extension part 41, whereby the whole is pressed downward. Further, the sub stay 47 that has the fuse hook 48 at the distal end thereof previously engaged in the lower engagement recess 25 is fastened to the middle stay 38. Thus, the left pannier stay 30 is mounted on the vehicle body side. The right pannier stay 31 also is mounted on the right side of the vehicle body in a similar way. After that, the lateral side part 36b on the rear side of the left and right pannier stays 30, 31 is connected by the cross pipes 34a and 34b.

Next, the first pannier box 17 and the second pannier box 18 are mounted each on the left and right pannier stays 30 and 31. The first pannier box 17 is engaged in such a manner that the lower hooks 46a, 46b on the lower side are aligned with the pedestals 37a, 37b which are provided in the lower side part 37 of the pannier stay 30, whereby to be pressed downward from above.

Further, when the pannier box 17 is rotated to stand with the engaged portion to the lower side part 37 as a fulcrum, the upper side part 35 is fitted to the lock part 65, and the pannier box 17 as a whole is engaged with the pannier stay 30. Then, when the lock lever 51 is brought into the lock position and the key cylinder 52 is brought into the lock position, the lock lever 51 is locked in the lock position and the pannier box 17 is locked in the state of being supported on the vehicle body side (the pannier stay30 side). The same applies to the second pannier box 18. In addition, the removal is performed in reverse order.

The lock mechanism 50 is configured in this way. Therefore, as shown in FIG. 12, when the second pannier box 18 is engaged with the pannier stay 31 which is previously mounted on the vehicle body side, and locked by the lock mechanism 50, the lock lever 51 is located in the lock position. Then, only when the cam 75 is in a secure lock state of being engaged with the first and second lock holes 57, 60 at the same time, the key 74 is able to be pulled out. When the lock lever 51 is located in the unlock position other than the above case, the extension part 78 prevents the cam 75 from being engaged into the second lock hole 60, and the key cylinder 52 is not rotated, whereby the key 74 is not able to be pulled out. Thus, the user can recognize the incomplete lock state since the key 74 is not able to be pulled out, and so, the misrecognition that the incomplete lock state is recognized as the lock completion can be avoided.

In other words, first, the pannier box 18 is engaged with pannier stay 31. Then, the lock lever 51 is rotated to the lock position. Thereafter, the key cylinder 52 is rotated by the key 74, and the cam 75 is engaged with the first lock hole 57 and the second lock hole 60 simultaneously. At that time, the state in which the pannier box 18 is engaged with the pannier stay 31 is locked by the lock mechanism 50. At the same time, since the key cylinder 52 is in the lock position and the key 74 can be pulled out, the completion of the lock can be recognized.

On the other hand, when the lock lever 51 is in the unlock position, the cam 75 comes into contact with the extension part 78 and cannot be engaged into the second lock hole 60 even if having the key cylinder 52 rotated by the key 74. Therefore, the key cylinder 52 cannot be rotated to the lock position, and the key 74 cannot be pulled out. Accordingly, the misrecognition that the completion of the lock by the lock mechanism 50 is recognized when the lock lever 51 is in the unlock position can be easily prevented.

Further, the lock plate 53 is fixed on the pannier box 18. Then, the lock lever 52 is pivotally supported on the lock plate 53 through the pivot shaft 54 (see FIG. 13). Moreover, on the lock plate 53 there is rotatably supported the engagement lever 61 which has the lock part (an engagement piece) 65 for engaging the pannier stay 31. When the lock lever 51 is in the lock position, the lock nail 77 of the lock lever 51 is configured to be engaged with the lock part 65.

With this configuration, the upper side part 35 of the pannier stay 31 is engaged with the lock part 65 by rotating the engagement lever 61, and the lock nail 77 of the lock lever 51 comes into engagement with the lock part 65 whereby to stop the rotation of the lock lever 51 when bringing the lock lever 51 into the lock position. Therefore, since the pannier stay 31 maintains the state of being engaged with the lock part 65, the pannier box 18 can be mounted on the pannier stay 31.

Further, as shown in FIG. 8, the lock mechanism 50 connects the pannier stay 31 and the upper part of the pannier box 18 and is arranged between the seat 15 and the pannier box 18. With this configuration, the lock mechanism 50 can be accommodated in a space formed between the pannier box 18 and the seat 15, so that the space-saved arrangement of the lock mechanism 50 can be achieved.

Further, as shown in FIG. 7, the lower hook 46a to be engaged with the lower side part 37 which is the lower part of the pannier stay 30 is provided in the lower part of the pannier box 17, and the pannier box 17 is provided to be rotatable in the left and right direction around the engagement portion. With this configuration, when the pannier box 17 is mounted on the pannier stay 30, first the lower part of the pannier box 17 is engaged with the lower side part 37 of the pannier stay 30. In this condition, when the upper side of the pannier box 17 is rotated with the engaged portion of the lower part as a fulcrum, the pannier box 17 can easily stand upright and be locked by the lock mechanism 50.

Although the dismounting is performed in reverse order, also in this case, the pannier box 17 can be easily dismounted by rotating the upper side of the pannier box 17with the lower part of the pannier box 17 as a fulcrum. The pannier box 17 can be easily mounted and dismounted in a labor-saving condition.

Further, as shown in FIGS. 3 and 4, in the case where the pannier box (17, 18) is supported on the lateral side of the rear frame, the upper engagement recesses 24 are provided in the upper part of the outer lateral surface of the carrier bracket 22, and the pannier box (17, 18) is engaged with these upper engagement recesses. Thus, the pannier box (17, 18) can be supported by utilizing the carrier bracket 22. In addition, since the carrier bracket 22 is made of resin, the upper engagement recesses 24 can be easily formed.

Furthermore, since the outside of the carrier bracket 22 is covered with the side cover 19, the external appearance can be improved. In addition, since the upper engagement recesses 24 are exposed outside through the window openings 19a, the pannier box can be engaged with the upper engagement recesses 24 even when the carrier bracket 22 is covered with the side cover 19.

By the way, this lock mechanism 50 may be provided not only in the pannier boxes (17, 18) located on the left and right of the vehicle body but also in various kinds of onboard container boxes located around the seat 15, such as a top box mounted on the rear side of the rear seat 15b, and the like. For example, it may be provided with respect to a top box 90 indicated by a phantom line in FIG. 1. This top box 90 has an opening in an upper part thereof to be opened and closed by a lid 91, and a bottom part 92 is supported on the rear carrier 16 through a box stay 93.

The box stay 93 is a frame member similar to the pannier stay 30. It extends substantially in parallel with an upper surface of the rear carrier 16. A front part of the box stay overlaps with and is fixed on a rear part of the rear carrier 16, and a rear part thereof extends rearwardly from the rear carrier 15.

The bottom part 92 of the top box 90 is placed on the box stay 93 and supported by engagement, and a rear part thereof is protruded rearward from the rear wheel 5. The bottom part 92 of the top box 90 is engaged from above with the box stay 93 on the front side thereof and locked to a rear end portion of the box stay 93 by the lock mechanism 50 on the rear end side thereof. Since the lock mechanism 50 is identical to the one used for the pannier box, the same numeral is given.

This lock mechanism 50 has substantially the same configuration as the lock mechanism 50 of the above referred pannier box. Not clearly shown in this drawing, it has the lock lever 51, the key cylinder 52, the engagement lever 61, the lock part 65, and the lock nail 77 which are the same as those shown in FIG. 12, etc., and each of them functions in the same way. Herein, reference characters of each of component elements are not indicated in FIG. 1.

The lock lever 51 is arranged sideways in a condition where the key groove of the key cylinder 52 faces rearward, and is rotated around the pivot shaft mounted from below the rear end portion of the bottom part 92. The key cylinder 52 is operated from the rear side.

In the bottom part 92 in the vicinity of the lock lever 51 there is provided a member similar to the engagement lever 61. This member is freely rotated with respect to the bottom part 92 and engaged to or disengaged from the rear end portion of the box stay 93. Further, it is locked by the lock lever 51 so as not to be rotated in a state of being engaged with the rear end portion of the box stay 93. Accordingly, this lock mechanism 50 may be used for locking not only in the pannier boxes but also in various kinds of onboard container boxes located around the seat 15, such as a top box 90 and the like, and may prevent the erroneous operation of the lock lever.

Next, the connection between the first pannier box 17 and the second pannier box 18 will be explained. Although the first pannier box 17 and the second pannier box 18 when mounting on the vehicle have been explained hereinabove, the first pannier box 17 and the second pannier box 18 can be separated from the vehicle body to be carried and can be used as a chair or the like by being dismounted from the vehicle body.

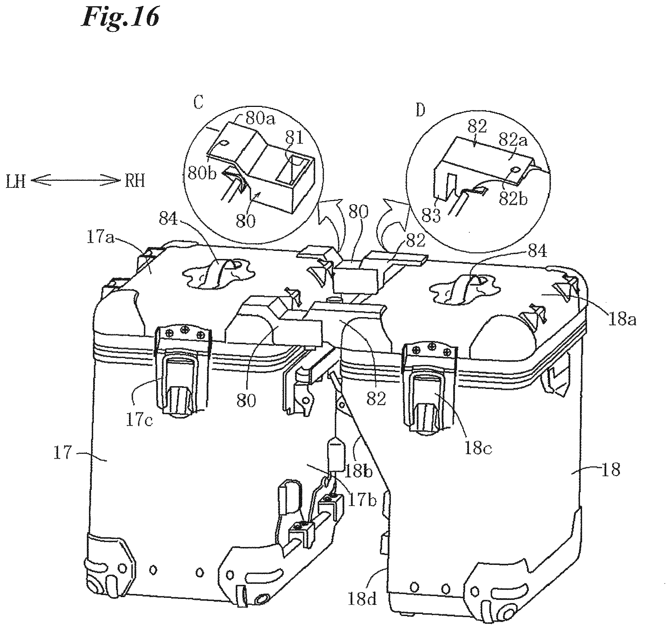

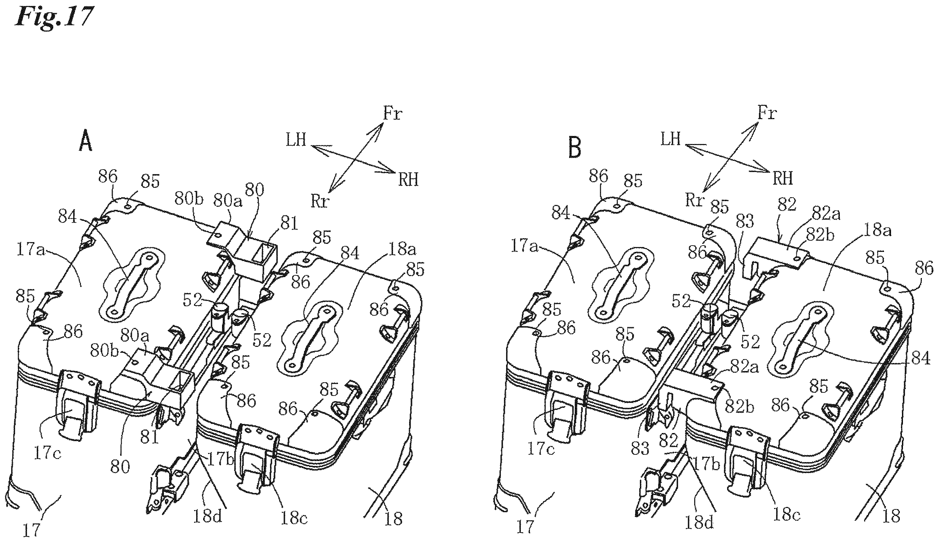

FIG. 16 shows an example of a connected and integrated structure of the first pannier box 17 and the second pannier box 18 when being dismounted from the vehicle body. In FIG. 17, FIG. 17-A shows a state in which a first connecting member 80 is provided only in the first pannier box 17, and FIG. 17-B shows a state in which a second connecting member 82 is provided only in the second pannier box 18.

In these drawings, the first connecting member 80 and the second connecting member 82 are provided in such a way as to project toward each other in front and in the rear of a region facing the inner lateral surfaces 17b, 18b of each top surface of the first pannier box 17 and the second pannier box 18.

Circles C and D of FIG. 16 are perspective views in enlarged scale of each of the connecting members 80 and 82. In this example, an engaging hole 81 is provided in the first connecting member 80, and an engaging projection 83 to be engaged into the engaging hole 81 is provided in the second connecting member 82. The engaging hole 81 and the engaging projection 83 are formed so as to be directed in the vertical direction.

In a state in which the inner lateral surfaces 17b, 18b face each other, the first pannier box 17 and the second pannier box 18 are placed side by side and come close to each other. Then, when the engaging projection 83 is engaged into the engaging hole 81, the first pannier box 17 and the second pannier box 18 are integrally connected together. At that time, the engaging hole 81 and the engaging projection 83 are engaged in the vertical direction, so that the connection is easily performed.

Then, as shown in FIG. 17, the first connecting members 80 are attached to two corner metal fittings 86 facing the inner lateral surface 17b, of four corner metal fittings 86 provided for reinforcing each of corners of the lid 17a. Each of the first connecting members 80 is provided with a mounting arm part 80a which is placed on the corner metal fitting 86. This mounting arm part 80a is placed on the corner metal fitting 86 and mounted on the corner metal fitting 86 by a long screw 80b.

The corner metal fittings 86 are previously mounted on the lid 17a by short screws 85. Therefore, when replacing the short screws 85 with the long screws 80b, the first connecting members 80 can be fastened to the lid 17a together with the corner metal fittings 86 by the long screws 80b. Further, each of the first connecting members 80 is provided on the lateral side of the lid 17a at a projecting amount substantially equal to a width (the width in the left and right direction in a mounted state) of the key cylinder 52 (see FIG. 17-A).

The second connecting members 82 are attached to two corner metal fittings 86 facing the inner lateral surface 18b, of four corner metal fittings 86 provided for reinforcing each of corners of the lid 18a. Each of the second connecting members 82 is provided with a mounting arm part 82a which is placed on the corner metal fitting 86. This mounting arm part 82a is placed on the corner metal fitting 86 and fastened to the lid 18a together with the corner metal fitting 86 by a long screw 82b. Further, each of the second connecting members 82 is provided on the lateral side of the lid 18a on the inner lateral surface 18b side at a projecting amount substantially equal to the width (the width in the left and right direction in the mounted state) of the key cylinder 52 (see FIG. 17-B).

Accordingly, the first connecting member 80 and the second connecting member 82 in an opposed relationship are fixedly connected by the engagement in the vertical direction between the engaging projection 83 and the engaging hole 81 with the inner lateral surfaces 17b and 18b in face-to-face relation, at a spaced interval corresponding to a sum of the projecting amounts of the first connecting member 80 and the second connecting member 82. Within the space between the inner lateral surfaces 17b and 18b, the key cylinders 52 mounted on each of the inner lateral surfaces 17b and 18b are arranged and accommodated side by side in the left and right direction.

With this configuration, when the first pannier box 17 and the second pannier box 18 are integrally connected together in a dismounted condition from the vehicle body, they are carried as one body by holding handles 84 provided on each top surface of the lids 17a and 18a, whereby to be easy to handle. Further, when the first pannier box 17 and the second pannier box 18 are connected together, they can be used as a single chair or table.

At that time, since the second pannier box 18 has the sizes in length and width of the lid 18a and the height of the whole which are harmonized with those of the first pannier box 17, the upper surface of the lid 18a does not create unevenness due to the difference in height and forms a continued flat surface in relation to the upper surface of the lid 17a. Moreover, since the lids 17a and 18a of each of the pannier boxes are formed in substantially a rectangular shape having the same shape and the same size in a top plan view respectively, substantially a rectangle in a top plan view of well-regulated shape which is enlarged twice by the connection is formed. Therefore, it is easy and convenient to use them as the table or the like.

Further, the first pannier box 17 is formed in substantially a rectangular shape, so that it can be used in a self-supporting state when being dismounted from the vehicle and placed on the ground. Particularly, since the pannier box of this embodiment is formed in substantially a longitudinally extending rectangular shape, it is hard to stand in the self-supporting state. However, even in this case, it is possible to stand stably by itself due to the connection.

On the other hand, the second pannier box 18 has the clearance recess 18d for the muffler 28. This clearance recess 18d corresponds to the shape formed by hollowing out an inner lower part of a rectangular parallelepiped, and the pannier box 18 becomes narrow in width on the lower side. Therefore, the pannier box 18 easily falls at the time of being placed on the ground, and it is difficult to stand by itself and to use it separately.

However, even in the case of the second pannier box 18 which is hard to stand in the self-supporting state, when it is connected to the first pannier box 17, the connected first and second pannier boxes 17 and 18 have the integrated structure and it is possible to stand in a self-supporting state. As a result, also the second pannier box 18 which easily falls can be used in the stable self-supporting state although the connection with the other pannier box is required. Herein, even in the case where both of the left and right pannier boxes are formed in a shape like the second pannier box 18 which is hard to stand in the self-supporting state, they may be used in the self-supporting state by connecting both of the pannier boxes.

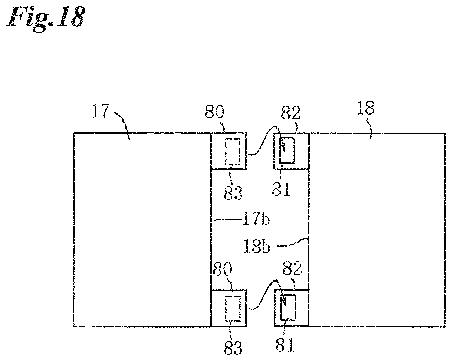

By the way, the first connecting member 80 and the second connecting member 82 are not limited to the above referred types, and various variations may be employed. FIGS. 18 to 20 show such variations and are diagrams schematically showing the first pannier box 17 and the second pannier box 18 in a top plan view, wherein the left and right connecting members 80, 82 also are schematically illustrated.

FIG. 18 is an example in which the engaging projection 83 is provided in the first connecting member 80 and the engaging hole 81 is provided in the second connecting member 82. With this configuration also, the connection can be provided by the engagement in the vertical direction similarly to the cases of FIGS. 16 and 17.

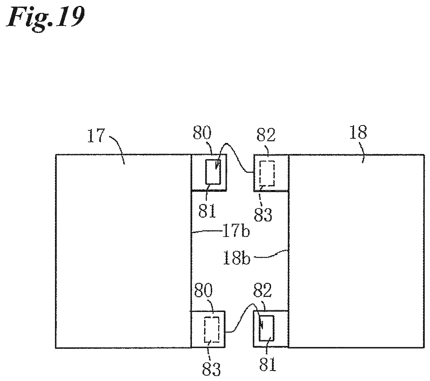

FIG. 19 is an example in which the engaging hole 81 is provided in one of a pair of the front and rear connecting members 80 and the engaging projection 83 is provided in the other and which the engaging projection 83 is provided in the second connecting member 82 which faces the first connecting member 80 having the engaging hole 81 and the engaging hole 81 is provided in the second connecting member 82 which faces the first connecting member 80 having the engaging projection 83. With this configuration also, the opposed first connecting member 80 and second connecting member 82 can be connected by the engagement in the vertical direction.

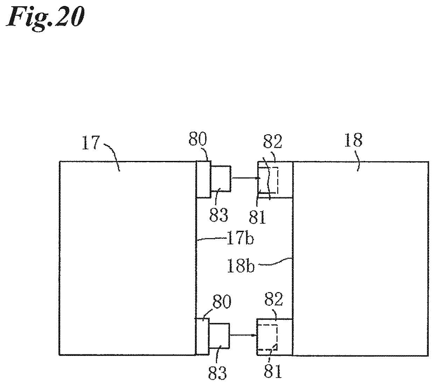

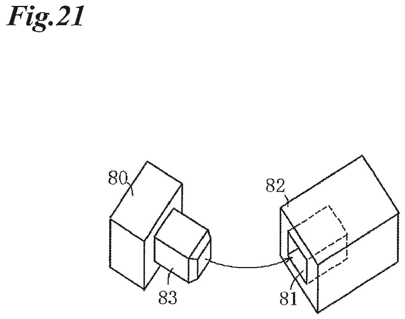

FIG. 20 is an example in which the connection is provided by the engagement in the left and right direction. The first connecting member 80 and the second connecting member 82 in this example are shown in FIG. 21. The explanation will be made with reference to FIG. 21. In a distal end side of the first connecting member 80 there is provided the engaging projection 83 which projects horizontally toward the corresponding second connecting member 82. On the other hand, in the second connecting member 82 there is provided the engaging hole 81 into which the engaging projection 83 is inserted horizontally. The engaging hole 81 is opened toward the first connecting member.

Then, when the first connecting member 80 and the second connecting member 82 are placed in a face-to-face relationship and the engaging projection 83 is fitted into the engaging hole 81 in the horizontal direction, the first connecting member 80 and the second connecting member 82 can be connected by the insertion in the left and right direction. Since there is no movement in the vertical direction at the time of engagement, the connection can be easily provided even when the pannier box is heavy in weight. Further, in this example, various variations similar to FIGS. 18 and 19 may be employed.

Next, the effects in this embodiment will be explained.

As shown in FIGS. 16 and 17, the first connecting member 80 and the second connecting member 82 for connecting the first pannier box 17 and the second pannier box 18 when the first pannier box 17 and the second pannier box 18 are removed from the vehicle body, are provided in the first pannier box 17 and the second pannier box 18. Therefore, the first pannier box 17 and the second pannier box 18 easily stand in the self-supporting state even when being placed on the ground, by connecting these pannier boxes through the first connecting member 17 and the second connecting member 82 when these pannier boxes have been dismounted from the vehicle body.

Further, as shown in FIGS, 16, 18 and 19, the engaging hole 81 which extends in a vertical direction is provided in one of the first connecting member 80 and the second connecting member 82, and the engaging projection 83 which extends in the vertical direction so as to be removably engaged with the engaging hole 81 is provided in the other. Therefore, the first connecting member 80 and the second connecting member 82 can be connected by the engagement in the vertical direction. Thus, the connecting operation can be easily performed.

As shown in FIGS. 16 to 20, the first connecting member 80 and the second connecting member 82 are provided in each of the insides of the first pannier box 17 and the second pannier box 18, and the first pannier box 17 and the second pannier box 18 are connected in a condition where the inner lateral surfaces 17b, 18b thereof are placed in face-to-face relation. Therefore, it is possible to accommodate the first connecting member 80 and the second connecting member 82 between the inner lateral surfaces 17b, 18b. Thus, since a projecting member like the connecting member is accommodated between the pannier boxes so as to make the periphery clean and tidy, the pannier boxes may be easily used as a chair or a table or the like and an external appearance at the time of connection may be improved.

As shown in FIGS. 2 and 16, the muffler 28 is located on one side of the vehicle body under the seat 15, and the clearance recess 18d for clearing the muffler 28 is provided in the inner lateral surface (in this embodiment, the inner lateral surface 18b of the second pannier box 18) of the pannier box to be arranged on the side of the muffler. Therefore, the pannier box 18 having the clearance recess 18d for the muffler is narrowed in width at the lower part thereof and becomes hard to stand by itself. However, when the first pannier box 17 and the second pannier box 18 are integrally connected to each other, even the pannier box which is hard to stand by itself can be used while standing in a self-supporting state.

Further, as shown in FIG. 16, etc., each of the first pannier box 17 and the second pannier box 18 is provided on the upper part thereof with the upwardly opened opening and the lid 17a, 18a for upwardly opening and closing the opening. Therefore, since the first pannier box 17 and the second pannier box 18 are connected so as to stand in a self-supporting state, it is possible to take in and out the articles from the upper side can be performed when the opening and the lid 17a, 18a for opening and closing the opening are provided on the upper part of each of pannier boxes. Thus, it is easy to take in and out the articles and it is easy to use.

While the above referred embodiment has been described as an example, it is to be understood that the present invention is not limited to the above described embodiment, and that various changes and modifications may be made without departing from the scope of the present invention. For example, the straddle type vehicle to which the present invention is applied may be various kinds of vehicles such as a three-wheeled motorcycle, a four-wheeled motorcycle and the like.

### DESCRIPTION OF REFERENCE CHARACTERS

15: Seat, 16: Rear carrier, 17: First pannier box, 18: Second pannier box, 22: Carrier bracket, 23a: Rear grip, 24: Upper engagement recess, 25: Lower engagement recess, 28: Muffler, 30:Pannier stay, 31: Pannier stay, 32a, 32b: Upper hook, 33a, 33b: Upper hook, 48: Fuse hook, 50: Lock mechanism, 51: Lock lever, 52: Key cylinder, 53: Lock plate, 61: Engagement lever, 65: Lock part, 74: Key, 75: Cam, 78: Extension part, 80: First connecting member, 81: Engaging hole, 82: Second connecting member, 83: Engaging projection

## Claims

1. A straddle type vehicle comprising:
a vehicle body;
a seat (15) arranged on a rear side of the vehicle body;
a first pannier box (17) and a second pannier box (18) removably arranged on left and right lateral sides of the seat;
**characterized in that** connecting members (80, 82) for connecting the first pannier box (17) and the second pannier box (18) when the first pannier box (17) and the second pannier box (18) are removed from the vehicle body, are provided in the first pannier box (17) and the second pannier box (18).

2. The straddle type vehicle according to claim 1, wherein the connecting members comprises a first connecting member (80) provided in the first pannier box (17) and a second connecting member provided in the second pannier box (18), and wherein an engaging hole (81) which extends in a vertical direction is provided in one of the first connecting member (80) and the second connecting member (82), and an engaging projection (83) which extends in the vertical direction so as to be removably engaged with the engaging hole (81) is provided in the other.

3. The straddle type vehicle according to claim 1 or 2, wherein the connecting members (80, 82) are provided in each of inner lateral surfaces (17b, 18b) of the first pannier box (17) and the second pannier box (18), and wherein the first pannier box (17) and the second pannier box (18) are connected in a condition where the inner lateral surfaces (17b, 18b) thereof are arranged in face-to-face relation.

4. The straddle type vehicle according to anyone of claims 1 to 3, further comprising a muffler (28) which is located on one side of the vehicle body under the seat (15), and a recess (18d) for clearing the muffler (28), which is provided in the inner lateral surface (18b) of one pannier box (18) to be arranged on the side of the muffler, of the first pannier box (17) and the second pannier box (18).

5. The straddle type vehicle according to anyone of claims 1 to 4, wherein each of the first pannier box (17) and the second pannier box (18) is provided on an upper part thereof with an upwardly opened opening and a lid (17a, 18a) for upwardly opening and closing the opening.
